# EUROPÄISCHE PATENTSCHRIFT

(11) **EP 3 163 104 B1**
(45) Veröffentlichungstag und Bekanntmachung des Hinweises auf die Patenterteilung: **13.01.2021**
(21) Anmeldenummer: 16195751.9
(22) Anmeldetag: 26.10.2016
(51) Int. Cl.: F16C 19/10, F16C 19/18, B04B 1/20, B04B 9/12

(54) **ZWEISEITIG WIRKENDES AXIALSCHRÄGWÄLZLAGER IN O-ANORDNUNG**
DOUBLE-DIRECTION ANGULAR CONTACT THRUST ROLLING BEARING IN BACK-TO-BACK ARRANGEMENT
BUTÉE À DOUBLE EFFET AVEC ÉLÉMENTS ROULANTS À CONTACT OBLIQUE DISPOSÉS EN O

(30) Priorität: 30.10.2015 DE 102015118599
(43) Veröffentlichungstag der Anmeldung: 03.05.2017
(73) Patentinhaber: Flottweg SE, 84137 Vilsbiburg (DE)
(72) Erfinder: Bauer, Georg, 84144 Geisenhausen (DE); Neudecker, Daniel, 85419 Mauern (DE)
(74) Vertreter: Meissner Bolte Partnerschaft mbB

(56) Entgegenhaltungen:
- EP-A1- 2 868 386
- CN-A- 101 865 208
- CN-Y- 201 121 647
- DE-A1- 2 612 272
- DE-A1- 4 130 759
- DE-A1- 4 236 035
- US-A- 5 364 335

## Beschreibung

### Hintergrund der Erfindung

Die Erfindung betrifft eine Vollmantelschneckenzentrifuge mit einer Lageranordnung für die Lagerung einer um eine Rotationsachse rotierbaren bzw. drehbaren Schnecke einer Vollmantelschneckenzentrifuge, bei der die Rotationsachse eine axiale und eine radiale Richtung definiert, mit einem Wälzkörperring, dessen Wälzkörper an einer Lagerbahn mit einem relativ zur radialen Richtung gemessenen Anlagewinkel anliegt.

Zentrifugen trennen mittels einer Trommel, die mit hoher Drehzahl um eine Rotationsachse bzw. Drehachse rotiert, kontinuierlich fließfähige Stoffgemische. Die Stoffgemische werden in Phasen unterschiedlicher Dichte getrennt. Insbesondere werden Flüssigkeiten von Feststoffen und Feststoffgemische gleichen Materials nach ihren Korngrößen getrennt.

Bei Vollmantelschneckenzentrifugen bildet innerhalb der Trommel eine Schnecke ein Förderwerkzeug, das mit einer Differenzdrehzahl zu der Drehzahl der Trommel um deren Rotationsachse rotiert. Diese Schnecke fördert abzutrennendes Material des Stoffgemisches in Richtung der Rotationsachse aus der Trommel heraus.

Die Rotationsachse der Vollmantelschneckenzentrifuge definiert eine axiale Richtung und eine radiale Richtung. In radialer Richtung wirkt aufgrund der Rotation der Trommel auf das zu trennende Stoffgemisch und dessen Phasen eine Radialkraft bzw. Zentrifugalkraft. In axialer Richtung tritt aufgrund der Förderwirkung der Schnecke eine Axialkraft auf. Diese Axialkraft wirkt einerseits auf das abzutrennende Material, anderseits aber natürlich auch umgekehrt auf die Schnecke selbst.

Damit die Schnecke in der Trommel um die Rotationsachse rotieren kann, ist die Schnecke mittels einer Lageranordnung gelagert. Die Lageranordnung stellt das Bindeglied zwischen der mit einer ersten Drehgeschwindigkeit rotierenden Trommel und einer mit einer zweiten, anderen Drehgeschwindigkeit drehenden Schnecke dar. Die Lageranordnung umfasst einen Wälzkörperring, der als eine Aneinanderreihung mehrerer Wälzkörper ausgebildet ist. Die Wälzkörper sind in der Regel Kugeln oder Nadeln, die sich entlang einer Lagerbahn bewegen. Die Lagerbahn bildet eine Lauffläche der Wälzkörper des Wälzkörperrings um die Rotationsachse. Dabei sind als "Schrägrollenlager" oder "Schrägkugellager" allgemein auch Lageranordnungen bekannt, deren Lagerbahn schräg gestellt ist. Solche Lager weisen einen relativ zur radialen Richtung der Rotationsachse gemessenen Anlagewinkel der Wälzkörper auf diese Lagerbahn auf.

Aus DE 41 30 759 A1 ist eine Vollmantelschneckenzentrifuge mit einem Schneckenlager bekannt, mit dem eine Schnecke an ihrer Schneckennabe rotierbar um eine Rotationsachse an einer Trommeldeckelnabe gelagert ist. Bei dem Schneckenlager handelt es sich um zwei nebeneinander angeordnete Schrägkugellager.

### Zugrundeliegende Aufgabe

Der Erfindung liegt die Aufgabe zugrunde, eine Vollmantelschneckenzentrifuge mit einer Lageranordnung zu schaffen, mittels der auf besonders vorteilhafte Weise eine Schnecke einer Vollmantelschneckenzentrifuge gelagert ist.

### Erfindungsgemäße Lösung

Diese Aufgabe ist erfindungsgemäß mit einer Vollmantelschneckenzentrifuge mit den Merkmalen des Anspruchs 1 gelöst. Dabei ist erfindungsgemäß die Lageranordnung mit einem Wälzkörperring geschaffen, dessen Wälzkörper an einer Lagerbahn mit einem relativ zur radialen Richtung gemessenen Anlagewinkel anliegt, wobei der Anlagewinkel vom Betrag her mit mehr als 45 Grad gestaltet ist.

Wie oben erwähnt, wurde erfindungsgemäß erkannt, dass die hier relevante Lageranordnung einer Schnecke einer Vollmantelschneckenzentrifuge zwei Kraftkomponenten aufzunehmen hat. Dies sind eine radiale und eine axiale Kraftkomponente. Beide Kraftkomponenten ergeben zusammen eine resultierende Kraft, einen Kraftvektor, der sich, bezogen auf die Richtung der Rotationsachse der Schnecke bzw. Trommel, schräg erstreckt.

Bei herkömmlichen Lageranordnungen für die Schnecke einer Vollmantelschneckenzentrifuge ist der relativ zur radialen Richtung gemessene Anlagewinkel der Lageranordnung ca. 15 bis 25 Grad groß. Bei einer solchen Lageranordnung ist, so glaubte man bisher, mit diesem Anlagewinkel ein Optimum hinsichtlich der beiden Zielsetzungen einer kleinen Baugröße der Lageranordnung und einer zugleich hohen Belastbarkeit der Lageranordnung erreicht.

Bei der erfindungsgemäßen Lageranordnung der Vollmantelschneckenzentrifuge ist hingegen der Anlagewinkel vom Betrag her mit mehr als 45 Grad gestaltet. Diese erfindungsgemäße Gestaltung basiert auf der Erkenntnis, dass bei Vollmantelschneckenzentrifugen während der meisten Betriebszeiten die axiale Kraftkomponente an den Schnecken die radiale Kraftkomponente bei weitem übersteigt. Der resultierende Kraftvektor zeigt daher sehr stark in axiale Richtung bzw. in Richtung der Rotationsachse und nur vergleichsweise schwach in radiale Richtung. Insbesondere bei Vollmantelschneckenzentrifugen, die mit einer hohen Rotationsgeschwindigkeit von z.B. 10000 Umdrehungen pro Minute und mit einer im Verhältnis dazu nur geringen Relativdrehzahl zwischen Trommel und Schnecke arbeiten, ist der Anteil der Axialkraft bei der resultierenden Kraft besonders groß.

Diese Ausrichtung der an der Lageranordnung während der meisten Betriebszeiten resultierenden Kraft ist gemäß der Erfindung dahingehend genutzt, dass der Anlagewinkel der dortigen Wälzkörper an der Lagerbahn ebenfalls vergleichsweise groß gestaltet ist. Das erfindungsgemäße Lager übernimmt damit stark die Funktion eines Axiallagers und zugleich nur vergleichsweise schwach die Funktion eines Radiallagers. Überraschenderweise hat sich ergeben, dass mit einer derartigen Lageranordnung das zugehörige Lager insgesamt in radialer Richtung kleiner gestaltet werden kann. Diese Verringerung in der radialen Bauhöhe der Lageranordnung ist aber insbesondere dann von großem Vorteil, wenn in der Vollmantelschneckenzentrifuge mit einer großen Teichtiefe gearbeitet werden soll. Dies bedeutet, dass das sich in der Zentrifuge befindende Material weit nach radial innen ragt und entsprechend für die dortige Nabe der Schnecke und deren Lageranordnung in radialer Richtung nur wenig Bauraum verbleibt.

Vorteilhaft sind bei der erfindungsgemäßen Lageranordnung der Vollmantelschneckenzentrifuge nicht nur ein erster, sondern auch mindestens ein zweiter Wälzkörperring vorgesehen, dessen Anlagewinkel ebenfalls vom Betrag her mit mehr als 45 Grad gestaltet ist. Dieser zweite Wälzkörperring kann so wie der erste Wälzkörperring ausgerichtet sein und entsprechend ebenfalls die auftretende resultierende Kraft abtragen. So ist dann die resultierende Kraft auf zwei Wälzkörperringe aufgeteilt, die Haltekraft der jeweiligen einzelnen Wälzkörperringe der Lageranordnung ist entsprechend geringer bzw. nahezu halbiert. Mit dieser geringeren Haltekraft können daher auch die Wälzkörper der Wälzkörperringe und die jeweilige Lagerbahn kleiner dimensioniert werden, was zu einer weiteren Verkleinerung der Bauhöhe führt.

Besonders vorteilhaft ist aber der Anlagewinkel des zweiten Wälzkörperringes vom Wert her entgegengesetzt zum Wert des ersten Wälzkörperringes. Beispielhaft hat der Anlagewinkel des erste Wälzkörperrings den Wert 45 Grad (in Worten: fünfundvierzig Grad) und der Anlagewinkel des zweite Wälzkörperrings den Wert -45 Grad (in Worten: minus fünfundvierzig Grad). Mittels dieser beiden Wälzkörperringe können so zu einer Radialkraft Axialkräfte auch in beide Richtungen abgeführt werden.

Besonders bevorzugt sind ferner zwei Außenlaufbahnen ausgebildet, die an einem gemeinsamen Außenring hergestellt sind. Die Außenlaufbahnen sind die in radialer Richtung weiter von der Rotationsachse weg liegenden Laufbahnen des Lagers. Diese Laufbahnen der zwei Wälzkörperringe sind an einem einstückigen Außenring hergestellt. Dieser einteilige Außenring ist im Gegensatz zu zwei einzelnen Außenringen besonders einfach zu montieren. Zusätzlich werden mittels dieses gemeinsamen Außenringes die Kräfte der zwei Außenlaufbahnen unmittelbar von einer Außenlaufbahn auf die andere Außenlaufbahn übertragen. Insbesondere ist es dann auch vorteilhaft, wenn die Anlagewinkel der beiden Wälzkörperringe entgegengesetzt ausgerichtet sind. So können unterschiedliche Kräfte, wie sie vor allem bei einem Starten oder Stoppen der zugehörigen Vollmantelschneckenzentrifuge auftreten, besonders vorteilhaft abgefangen werden.

In vorteilhafter Weise ist ferner der gemeinsame Außenring axial beidseitig abgestützt gehalten. Die Abstützung des Außenrings auf dessen beiden axialen Seiten verhindert, dass sich der Außenring in axialer Richtung verschieben könnte. Die auftretenden Axialkräfte können so toleranzfrei an diese Abstützung weitergegeben werden.

In bevorzugter Weise sind im Gegensatz dazu zwei Innenlaufbahnen ausgebildet, die an zwei separaten Innenringen hergestellt sind. Die zwei Innenlaufbahnen sind in radialer Richtung näher an der Rotationsachse ausgebildet als der Außenring. Sie befinden sich insbesondere auf beiden Seiten hin axial nach außen versetzt zu den Außenlaufbahnen. Mittels der beiden getrennten Innenlaufbahnen kann die Lageranordnung besonders einfach komplettiert und auch montiert werden. Zusätzlich dazu ist so ein Toleranzausgleich an den Innenlaufbahnen in axialer Richtung möglich.

Erfindungsgemäß vorteilhaft sind die zwei Innenringe mittels eines Abstandsrings voneinander beabstandet axial gehalten. Der Abstandsring überbrückt den zwischen den zwei Innenringen auftretenden Spalt und beabstandet beide Innenringe gleichmäßig zueinander. Zusätzlich dazu werden über diesen Abstandsring auftretende Kräfte von einem der Innenringe auf den jeweilig anderen Innenring übertragen.

Ferner sind bevorzugt die zwei Innenringe axial nur einseitig bzw. an einer Seite abgestützt gehalten. Mittels dieser Abstützung können die Innenringe die auftretenden Axialkräfte an diese Seite hin weitergeben. Auf der kraftabtragenden Seite ist der Innenring vorzugsweise mittels einer ortsfesten Abstützfläche gehalten. Um die Montage zu erleichtern ist auf der anderen gegenüberliegenden axialen Seite bevorzugt der andere Innenring mittels eines Sperrrings gehalten.

In vorteilhafter Weise sind ferner die Anlagewinkel der Wälzkörper der beiden Wälzkörperringe vom Betrag her gleich groß gestaltet. Dieser gleiche Betrag des Anlagewinkels ermöglicht es, dass die von den Wälzkörpern übertragenen Kräfte gleichmäßig auf beide Innenringe verteilt werden. Insbesondere ist es dann vorteilhaft, wenn die Anlagewinkel der beiden Wälzkörperringe entgegengesetzt ausgerichtet sind, wenn also ein Winkel positiv (z.B. +45°) und der andere negativ (z.B. -45°) ist, sie im Betrag (z.B. 45°) aber dennoch gleich sind. So können die auftretenden Kräfte insgesamt in einer homogenen Struktur übertragen werden.

Erfindungsgemäß besonders bevorzugt ist jeder Anlagewinkel vom Betrag her mit mehr als 50 Grad gestaltet. Mit einem Anlagewinkel von mehr als 50 Grad kann der Anteil der Axialkraft an der resultierenden Kraft noch etwas größer sein als der Anteil der Radialkraft. Besonders bevorzugt ist jeder Anlagewinkel vom Betrag her mit zwischen 53 und 62 Grad, insbesondere zwischen 55 und 60 Grad gestaltet. Diese Bereiche des Anlagewinkels sind im Hinblick auf die relevanten Drehzahlbereiche der Trommel mitsamt der Schnecke bei Vollmantelschneckenzentrifugen in Bezug auf die dortigen Differenzdrehzahlen zwischen Trommel und Schnecke optimal.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt einer Vollmantelschneckenzentrifuge entlang ihrer Rotationsachse,
- Fig. 2: einen Längsschnitt einer Lageranordnung einer Schnecke der Vollmantelschneckenzentrifuge gemäß Fig. 1 gemäß dem Stand der Technik, und
- Fig. 3: einen Längsschnitt eines Ausführungsbeispiels einer Lageranordnung einer Schnecke der Vollmantelschneckenzentrifuge gemäß der Erfindung.

### Detaillierte Beschreibung des Ausführungsbeispiels

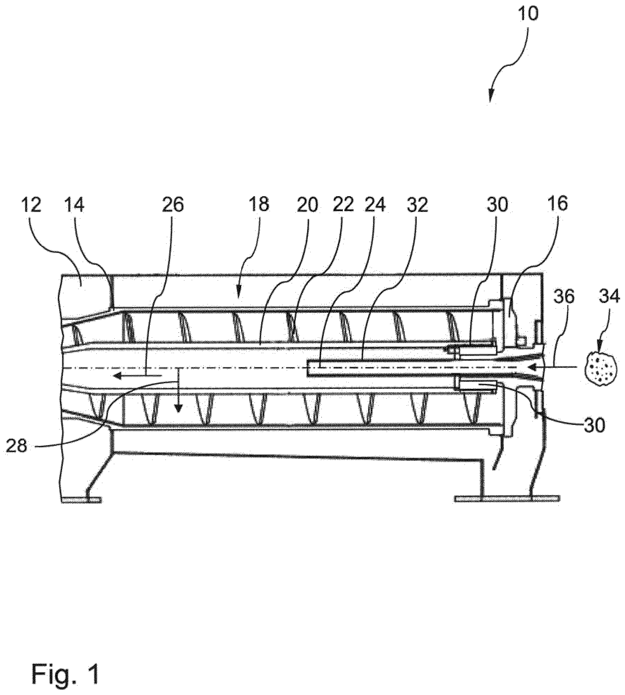

Fig. 1 zeigt eine Vollmantelschneckenzentrifuge 10 mit einem Gehäuse 12 in der sich eine hohlzylinderförmige Trommel 14 mit einem Trommeldeckel 16 befindet. Innerhalb der Trommel 14 befindet sich eine Schnecke 18, die eine hohlzylinderförmige Schneckennabe 20 mit einer diese umgebenden Schneckenwendel 22 umfasst. Die Trommel 14 und die Schnecke 18 erstrecken sich längs einer Rotationsachse 24, wobei die Trommel 14 rotieren und sich die Schnecke 18 relativ zu der Trommel 14 in deren Inneren drehen kann. Die Rotationsachse 24 definiert eine axiale Richtung 26 und eine radiale Richtung 28.

Die Schnecke 18 ist mit der Vollmantelschneckenzentrifugen-Lageranordnung bzw. Lageranordnung 30 zu dem Trommeldeckel 16 hin rotierend gelagert. Den Trommeldeckel 16 durchbrechend ist ein feststehendes Einlassrohr 32 in die Schnecke 18 hinein angeordnet. Durch dieses Einlassrohr 32 hindurch wird im Betrieb der Vollmantelschneckenzentrifuge 10 zu trennendes, gemischtes Gut 34 in Richtung des Pfeils 36 in die Trommel 14 eingebracht. Das Gut 34 wird anschließend durch die Rotation der Trommel 14 entmischt und getrennt in verschieden schwere Phasen aus der Trommel 14 abgeführt. Die schwere Phase bzw. der schwere Anteil wird mittels der Schnecke 18 aus der Trommel 14 in axialer Richtung und dann nach radial innen entlang eines (nicht dargestellten) Konus der Trommel 14 nach radial innen hin ausgetragen. Die leichte Phase bzw. der leichtere, flüssige Anteil des zu trennenden Gutes 34 fließt durch den Trommeldeckel 16 ab.

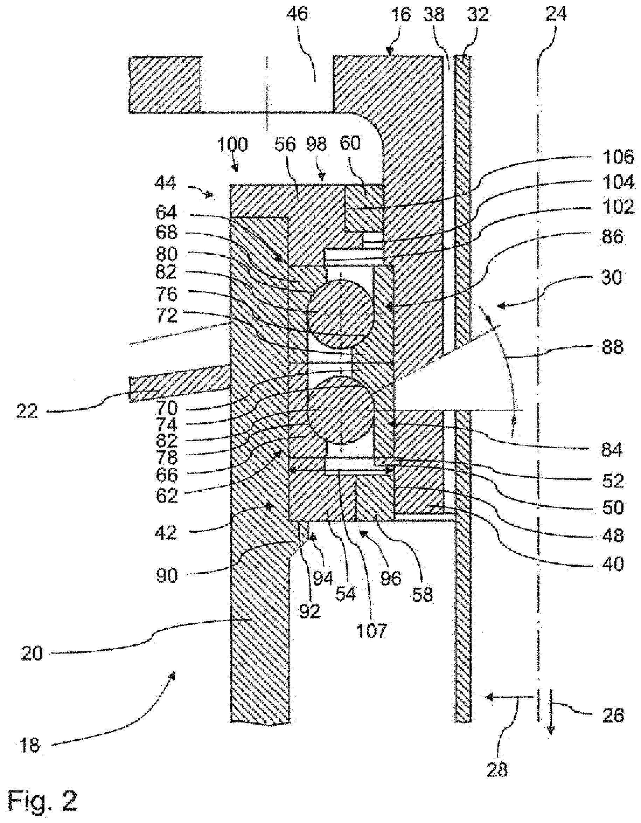

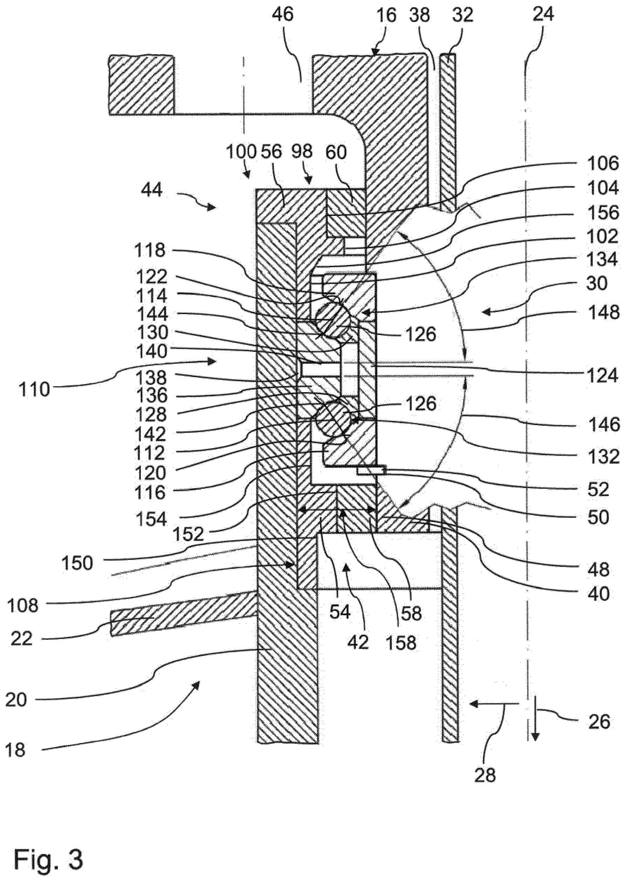

Fig. 2 und 3 zeigen die Schnecke 18 mit der Schneckennabe 20 und einem Abschnitt der Schneckenwendel 22 sowie die Rotationsachse 24. Zwischen der Rotationsachse 24 und der Schneckennabe 20 befinden sich von der Rotationsachse 24 in radialer Richtung 28 nach außen hin das Einlassrohr 32, ein Spalt 38, ein hohlzylinderförmiger Vorsprung 40 des Trommeldeckels 16 und die Lageranordnung 30. Die Lageranordnung 30 ist links sowie rechts in axialer Richtung 26 flankiert von zwei Dichtanordnungen 42, 44.

Der Trommeldeckel 16 weist in axialer Richtung 26 eine Auslassöffnung 46 und in radialer Richtung 28 zum Ende des Vorsprungs 40 hin eine Stufe 48 mit einer Nut 50 auf. In diese Nut 50 ist ein Sperrring 52 eingefügt. Die Dichtanordnungen 42, 44 umfassen jeweils einen Fixierring 54, 56 und einen Dichtring 58, 60.

Die erste Dichtanordnung 42 dichtet in axialer Richtung 26 die Lageranordnung 30 zum Inneren der Schneckennabe 20 hin mittels des Dichtringes 60 ab. Die Dichtanordnung 42 ist dabei zwischen dem Ende des Vorsprungs 40 des Trommeldeckels 16 und der Schneckennabe 20 ausgebildet. Auf der axial gegenüberliegenden Seite dichtet die zweite Dichtanordnung 44 die Lageranordnung 30 in Richtung der Auslassöffnung des Trommeldeckels 16 hin ab. Diese zweite Dichtanordnung 44 ist zwischen dem Ende der Schneckennabe 20 und dem Vorsprung 40 des Trommeldeckels 16 ausgebildet.

Die Lageranordnung 30 ist in radialer Richtung 28 zu der Rotationsachse 24 hin bei dem Vorsprung 40 auf die Stufe 48 gesetzt. In axialer Richtung 26 ist die Lageranordnung 30 zum Trommeldeckel 16 über die Stufe 48 des Vorsprungs 40 geschoben. Am Ende des Vorsprungs 40 ist die Lageranordnung 30 mit dem Sperrring 52 fixiert.

Radial außen stützt sich an der Lageranordnung 30 die Schneckennabe 20 ab. Hier ist die Lageranordnung 30 in axialer Richtung 26 zwischen den zwei Fixierringen 54, 56 eingeklemmt.

Die Fig. 2 zeigt den Stand der Technik der Lageranordnung 30 mit zwei in axialer Richtung 26 nebeneinander angeordneten Lagern 62, 64. Die Lager 62, 64 umfassen jeweils einen Außenring 66, 68 und einen Innenring 70, 72 mit jeweils einer Innenlagerbahn 74 bzw. 76 und einer Außenlagerbahn 78 bzw. 80. Zwischen den jeweiligen Innenlagerbahnen 74, 76 und Außenlagerbahnen 78, 80 befinden sich mehrere kugelförmige Wälzkörper 82 die einen ersten Wälzkörperring 84 und einen zweiten Wälzkörperring 86 ausbilden. Der jeweilige Wälzkörperring 84, 86 weist dabei jeweils einen relativ zur radialen Richtung 28 definierten Anlagewinkel 88 zu den Lagerbahnen 74,76, 78 und 80 von + / - 25° (in Worten: plus bzw. minus fünfundzwanzig Grad) auf.

Die Schneckennabe 20 weist bei dieser Lageranordnung 30 einen Bund 90 mit einer Anlagefläche 92 auf. Dieser Bund 90 ist im Inneren der Schneckennabe 20 vor dem Endbereich des Vorsprungs 40 angeordnet.

An der Anlagefläche 92 liegt ein erster Schenkel 94 des ersten Fixierrings 54 an. Dieser Schenkel 94 weist in radiale Richtung 28 zur Rotationsachse 24 und bildet den Sitz des ersten Dichtrings 58. Ein zweiter Schenkel 96 des ersten Fixierrings 54 stützt den ersten Außenring 66 des ersten Lagers 62 der Lageranaordnung 30 zu der Anlagefläche 92 des Bundes 90 hin in axialer Richtung 26 ab.

Auf der in axialer Richtung 26 gegenüberliegenden Seite in Richtung des Trommeldeckels 16 hin wird der zweite Außenring 68 des zweiten Lagers 64 der Lageranordnung 30 von einem ersten Schenkel 98 des zweiten Fixierrings 56 abgestützt. Dieser Schenkel 98 weist in radialer Richtung 28 zur Rotationsachse hin drei Stufen 102,104,106 auf. Die Höhe der ersten Stufe 102 entspricht der Höhe des anliegenden zweiten Außenrings. Die zweite Stufe 104 bildet zu der dritten Stufe 106 hin eine Nase aus, um den in der dritten Stufe 106 gehaltenen zweiten Dichtring 60 gegen ein Verrutschen in axialer Richtung 26 abzustützen. Der zweite Schenkel 100 des zweiten Fixierrings 56 ist mit einem hier nicht dargestellten Befestigungsmittel mit der Stirnseite der Schneckennabe 20 ortsfest verbunden und fixiert so die Lageranordnung 30.

Wie bereits erwähnt stützt die Lageranordnung 30 in radialer Richtung 28 die Schneckennabe 20 zu dem Vorsprung 40 des Trommeldeckels 16 hin ab. Dabei weist diese Lageranordnung 30 gemäß der Fig. 2 zwischen der Schneckennabe 20 und dem Vorsprung 40 des Trommeldeckels 16 eine Bauhöhe 107 in radialer Richtung 28 auf.

Die Fig. 3 zeigt eine Ausführungsform der erfindungsgemäßen Lageranordnung 30 bei der in die Schneckennabe 20 eine Stufe 108 ausgebildet ist. Die Lageranordnung 30 ist dabei als ein gesamtes Axiallager 110 mit zwei Lagerbahnen 112 und 114 ausgebildet. Dieses Axiallager 110 umfasst zwei Innenringe 116 und 118, mit jeweils einer Innenlaufbahn 120 und 122. Die Innenringe 116, 118 sind mittels eines Abstandsrings 124 axial beabstandet. Desweiteren umfasst das Axiallager 110 kugelförmige Wälzkörper 126 mit jeweils einem Käfig 128, 130, die in zwei Wälzkörperringen 132, 134 angeordnet sind, sowie einen Außenring 136 mit einer trapezförmigen Nut 138 und einer radialen Bohrung 140. Der Außenring 136 weist zwei Außenlaufbahnen 142, 144 auf, an denen die jeweiligen Wälzkörperringe 132, 134 mit ihren Wälzkörpern 126 entlanglaufen. Die Wälzkörper 126 laufen dabei an den Außenlaufbahnen 142, 144 und an den Innenlaufbahnen 120, 122 mit einem jeweiligen Anlagewinkel 146, 148.

Der Außenring 136 des Axiallagers 110 ist in axialer Richtung 26 mittels der beiden an der Schneckennabe 20 anliegenden Fixierringe 54, 56 abgestützt und so an einem axialen Verschieben gehindert. Im Unterschied zu Fig. 2 ist dieser erste Fixierring 54 T-förmig und an die Stufe 108 der Schneckennabe 20 angesetzt. Der Fixierring 54 stützt den Außenring 136 in axialer Richtung gegen die Stufe 108 ab. Der zweite L-förmige Fixierring 56 ist wie in Fig. 2 zwischen dem Außenring 136 und dem Trommeldeckel 16 eingefügt und an der Stirnseite der Schneckennabe 20 befestigt.

An diesem ersten T-förmigen Fixierring 54 sind zur Rotationsachse 24 hin drei unterschiedlich hohe Stufen 150, 152 und 154 gebildet. Die erste Stufe 150 ist radial so hoch, wie die Stufe 108 . Die zweite Stufe 152 erhöht den Fixierring 54 zur Rotationsachse 24 hin. Diese Stufe 152 bildet den Sitz für den ersten Dichtring 58 zwischen dem Fixierring 54 und der Stufe 48 des Vorsprungs 40 des Trommeldeckels 16. An der dritten Stufe 154 verringert sich die radiale Höhe zum Außenring 136 hin.

Der zweite Fixierring 56 ist ähnlich wie in Fig. 2 mit zwei Schenkeln 98, 100 und drei Stufen 102,104,106 ausgeführt. Zusätzlich ist zwischen der ersten und der zweiten Stufe eine Fase 156 angeordnet. Die Höhe der ersten Stufe 102 entspricht hier der Abstützhöhe des anliegenden Außenrings 136.

Das Axiallager 110 ist mit seinen beiden Innenringe 116 und 118 und dem Abstandsring 124 zu der Rotationsachse 24 hin an die Stufe 48 des Vorsprungs 40 angefügt. In axialer Richtung 26 ist der erste Innenring 116 des Axiallagers 110 gegen den Trommeldeckel 16 hin an der Stufe 48 abgestützt. Gegenüber dieser Stufe ist der zweite Innenring 118 des Axiallagers 110 mittels des Sperrrings 52 gegen ein Verschieben in axialer Richtung 26 von dem Trommeldeckel 16 weg gehindert.

Die beiden Innenringe 116, 118 sind an ihren zu dem Außenring 136 weisenden Ecken konkav ausgenommen bzw. ausgehöhlt. Diese konkave Aushöhlung bildet die jeweilige Innenlaufbahn 120 und 122 an denen die Wälzkörper 126 der jeweiligen Wälzkörperringe 132 und 134 entlangrollen. Die Wälzkörper 126 liegen hier jeweils mit dem Anlagewinkel 146, 148 auf den Innenlaufbahnen 120, 122 an. An der ersten Innenlaufbahn 120 beträgt der erste Anlagewinkel 146 +60° (in Worten: plus sechzig Grad). Auf der zweiten Innenlaufbahn 122 ist der zweiten Anlagewinkel 148 -60° (in Worten: minus sechzig Grad). Der Betrag der Werte der beiden Anlagewinkel 146 und 148, also 60 (in Worten: sechzig), ist dabei gleich.

Gegenüberliegend nach radial außen und axial etwas versetzt von den beiden Innenlaufbahnen 120, 122 befinden sich die zwei Außenlaufbahnen 142, 144, die ebenfalls an je einer Aushöhlung des dortigen Außenrings 136 ausgebildet sind. Wie bei den Innenlaufbahnen 120, 122 rollen auf diesen Außenlaufbahnen 142, 144 die Wälzkörper 126 der Wälzkörperringe 132, 134 mit den jeweiligen Anlagewinkel 146, 148. Die Anlagewinkel 146, 148 auf den zwei Außenlaufbahnen 142, 144 entsprechen dabei den Anlagewinkeln 146, 148 der gegenüberliegenden Innenlaufbahnen 120, 122. Bei den Außenlaufbahnen 142, 144 ist entsprechend der der Anlagewinkel 146 ebenfalls plus sechzig Grad und der Anlagewinkel 148 minus sechzig Grad.

Diese Lageranordnung 30 stützt wie die Lageranordnung 30 in Fig. 2 in radialer Richtung 28 und in axialer Richtung 26 die Schneckennabe 20 zu dem Vorsprung 40 des Trommeldeckels 16 hin ab. Dabei weist diese Lageranordnung 30 gemäß der Fig. 3 zwischen der Schneckennabe 20 und dem Vorsprung 40 des Trommeldeckels 16 eine Bauhöhe 158 in radialer Richtung 28 auf.

Im Gegensatz zu der Lageranordnung 30 gemäß Fig. 2 mit deren Bauhöhe 107 ist die Bauhöhe 158 der Lageranordnung 30 gemäß Fig. 3 geringer bzw. kleiner.

Zusätzlich dazu ist die Lageranordnung 30 in der Schneckennabe 20 mit der Stufe 108 versenkt. Damit ist die Schneckennabe 20 noch weiter nach radial innen gerückt. Dies ermöglicht es, dass die Schneckennabe 20 nicht nur um die verringerte Bauhöhe 158 der Lageranordnung 30 gemäß Fig. 3 nach radial innen versetzt ist, sondern zusätzlich auch um die Höhe der Stufe 108.

Insgesamt ist auf diese Weise mittel der verringerten Bauhöhe 158 und der Stufe 108 eine Schneckennabe 20 gemäß Fig. 3 geschaffen, welche einen besonders kleine Außenradius aufweist und damit eine besonders große Teichtiefe bei der zugehörigen Vollmantelschneckenzentrifuge 10 zulässt.

### Bezugszeichenliste

- 10: Vollmantelschneckenzentrifuge
- 12: Gehäuse
- 14: Trommel
- 16: Trommeldeckel
- 18: Schnecke
- 20: Schneckennabe
- 22: Schneckenwendel
- 24: Rotationsachse
- 26: axiale Richtung
- 28: radiale Richtung
- 30: Vollmantelschneckenzentrifugen-Lageranordnung bzw. Lageranordnung
- 32: Einlassrohr
- 34: Gut
- 36: Pfeil
- 38: Spalt
- 40: Vorsprung
- 42: Dichtanordnung
- 44: Dichtanordnung
- 46: Auslassöffnung
- 48: Stufe
- 50: Nut
- 52: Sperrring
- 54: erster Fixierring
- 56: zweiter Fixierring
- 58: erster Dichtring
- 60: zweiter Dichtring
- 62: erstes Lager
- 64: zweites Lager
- 66: erster Außenring
- 68: zweiter Außenring
- 70: erster Innenring
- 72: zweiter Innenring
- 74: erste Innenlagerbahn
- 76: zweite Innenlagerbahn
- 78: erste Außenlagerbahn
- 80: zweite Außenlagerbahn
- 82: Wälzkörper
- 84: erster Wälzkörperring
- 86: zweiter Wälzkörperring
- 88: Anlagewinkel
- 90: Bund
- 92: Anlagefläche
- 94: erster Schenkel
- 96: zweiter Schenkel
- 98: erster Schenkel
- 100: zweiter Schenkel
- 102: erste Stufe
- 104: zweite Stufe
- 106: dritte Stufe
- 107: Bauhöhe
- 108: Stufe
- 110: Axiallager
- 112: Lagerbahn
- 114: Lagerbahn
- 116: Innenring
- 118: Innenring
- 120: Innenlaufbahn
- 122: Innenlaufbahn
- 124: Abstandsring
- 126: Wälzkörper
- 128: Käfig
- 130: Käfig
- 132: Wälzkörperring
- 134: Wälzkörperring
- 136: Außenring
- 138: Nut
- 140: Bohrung
- 142: Außenlaufbahnen
- 144: Außenlaufbahnen
- 146: Anlagewinkel
- 148: Anlagewinkel
- 150: Stufe
- 152: Stufe
- 154: Stufe
- 156: Fase
- 158: Bauhöhe

## Patentansprüche

1. Vollmantelschneckenzentrifuge mit einer innerhalb einer Trommel (14) ausgebildeten Schnecke (18), wobei die Schnecke (18) ein Förderwerkzeug bildet, das mit einer Differenzdrehzahl zu der Drehzahl der Trommel (14) um eine Rotationsachse (24) rotiert, wobei die Rotationsachse (24) eine axiale und eine radiale Richtung (26, 28) definiert,
wobei die Schnecke (18) mittels einer Lageranordnung (30) gelagert ist, und wobei die Lageranordnung (30) das Bindeglied zwischen der mit einer ersten Drehgeschwindigkeit rotierenden Trommel (14) und der mit einer zweiten, anderen Drehgeschwindigkeit drehenden Schnecke (18) darstellt, wobei die Lageranordnung (30) einen Wälzkörperring (132, 134) aufweist, dessen Wälzkörper (126) an einer Lagerbahn (112, 114) mit einem relativ zur radialen Richtung (28) gemessenen Anlagewinkel (146, 148) anliegt, **dadurch gekennzeichnet, dass**
der Anlagewinkel (146, 148) vom Betrag her mit mehr als 45 Grad gestaltet ist.

2. Vollmantelschneckenzentrifuge nach Anspruch 1,
**dadurch gekennzeichnet, dass**
ein zweiter Wälzkörperring (134) vorgesehen ist, dessen Anlagewinkel (148) ebenfalls vom Betrag her mit mehr als 45 Grad gestaltet ist.

3. Vollmantelschneckenzentrifuge nach Anspruch 2,
**dadurch gekennzeichnet, dass**
zwei Außenlaufbahnen (142, 144) ausgebildet sind, die an einem gemeinsamen Außenring (136) hergestellt sind.

4. Vollmantelschneckenzentrifuge nach Anspruch 3,
**dadurch gekennzeichnet, dass**
der gemeinsame Außenring (136) axial beidseitig abgestützt gehalten ist.

5. Vollmantelschneckenzentrifuge nach einem der Ansprüche 2 bis 4,
**dadurch gekennzeichnet, dass**
zwei Innenlaufbahnen (120, 122) ausgebildet sind, die an zwei separaten Innenringen (116, 118) hergestellt sind.

6. Vollmantelschneckenzentrifuge nach Anspruch 5,
**dadurch gekennzeichnet, dass**
die zwei Innenringe (116, 118) mittels eines Abstandsrings (124) voneinander beabstandet axial gehalten sind.

7. Vollmantelschneckenzentrifuge nach Anspruch 5 oder 6,
**dadurch gekennzeichnet, dass**
die zwei Innenringe (116, 118) axial einseitig abgestützt gehalten sind.

8. Vollmantelschneckenzentrifuge nach einem der Ansprüche 2 bis 7,
**dadurch gekennzeichnet, dass**
die Anlagewinkel (146, 148) der Wälzkörper (126) der beiden Wälzkörperringe (132, 134) vom Betrag her gleich groß gestaltet sind.

9. Vollmantelschneckenzentrifuge nach einem der Ansprüche 1 bis 8,
**dadurch gekennzeichnet, dass**
jeder Anlagewinkel (146, 148) vom Betrag her mit mehr als 50 Grad gestaltet ist.

10. Vollmantelschneckenzentrifuge nach einem der Ansprüche 1 bis 9,
**dadurch gekennzeichnet, dass**
jeder Anlagewinkel (146, 148) vom Betrag her mit zwischen 53 und 62 Grad, insbesondere zwischen 55 und 60 Grad gestaltet ist.

## Claims

1. A solid bowl screw centrifuge having a screw (18) formed within a drum (14), wherein the screw (18) constitutes a conveying tool which rotates at a differential speed to the speed of the drum (14) around an axis of rotation (24), wherein the axis of rotation (24) defines an axial and a radial direction (26, 28),
wherein the screw (18) is supported by means of a bearing arrangement (30), and wherein the bearing arrangement (30) represents the link between the drum (14) rotating at a first rotational speed and the screw (18) rotating at a second, different rotational speed, wherein the bearing arrangement (30) has a rolling element ring (132, 134), the rolling element (126) of which rests against a bearing track (112, 114) at a contact angle (146, 148) as measured relative to the radial direction (28),
**characterized in that**
the contact angle (146, 148), as far as its amount is concerned, is designed to have more than 45 degrees.

2. The solid bowl screw centrifuge according to claim 1,
**characterized in that**
a second rolling element ring (134) is provided, the contact angle (148) of which, as far as its amount is concerned, is likewise designed to have more than 45 degrees.

3. The solid bowl screw centrifuge according to claim 2,
**characterized in that**
two outer raceways (142, 144) are formed, which are made on a common outer ring (136).

4. The solid bowl screw centrifuge according to claim 3,
**characterized in that**
the common outer ring (136) is kept to be axially supported on both sides.

5. The solid bowl screw centrifuge according to any one of claims 2 to 4,
**characterized in that**
two inner raceways (120, 122) are formed, which are made on two separate inner rings (116, 118).

6. The solid bowl screw centrifuge according to claim 5,
**characterized in that**
the two inner rings (116, 118) are kept to be axially spaced from one another by means of a spacer ring (124).

7. The solid bowl screw centrifuge according to claim 5 or 6,
**characterized in that**
the two inner rings (116, 118) are kept to be axially supported on one side.

8. The solid bowl screw centrifuge according to any one of claims 2 to 7,
**characterized in that**
the contact angles (146, 148) of the rolling elements (126) of the two rolling element rings (132, 134), as far as their amount is concerned, are designed to be of equal size.

9. The solid bowl screw centrifuge according to any one of claims 1 to 8,
**characterized in that**
each contact angle (146, 148), as far as its amount is concerned, is designed to have more than 50 degrees.

10. The solid bowl screw centrifuge according to any one of claims 1 to 9,
**characterized in that**
each contact angle (146, 148), as far as its amount is concerned, is designed to have between 53 and 62 degrees, in particular between 55 and 60 degrees.

## Revendications

1. Centrifugeuse à vis sans fin à paroi pleine comportant une vis sans fin (18) réalisée à l'intérieur d'un tambour (14), la vis sans fin (18) constituant un outil de transport qui tourne autour d'un axe de rotation (24) à une vitesse de rotation différente de la vitesse de rotation du tambour (14), l'axe de rotation (24) définissant des directions axiale et radiale (26, 28),
dans laquelle
la vis sans fin (18) est montée à l'aide d'un ensemble de palier (30), et l'ensemble de palier (30) représente l'organe de liaison entre le tambour (14) tournant à une première vitesse de rotation et la vis sans fin (18) tournant à une autre, seconde vitesse de rotation,
l'ensemble de palier (30) comprend une bague de corps de roulement (132, 134) dont le corps de roulement (126) s'appuie contre une voie de palier (112, 114) avec un angle d'appui (146, 148) mesuré par rapport à la direction radiale (28),
**caractérisée en ce que**
l'angle d'appui (146, 148) est conçu avec une valeur supérieure à 45 degrés.

2. Centrifugeuse à vis sans fin à paroi pleine selon la revendication 1,
**caractérisée en ce que**
il est prévu une seconde bague de corps de roulement (134) dont l'angle d'appui (148) est également conçu avec une valeur supérieure à 45 degrés.

3. Centrifugeuse à vis sans fin à paroi pleine selon la revendication 2,
**caractérisée en ce que**
il est prévu deux voies de circulation extérieures (142, 144) réalisées sur une bague extérieure commune (136).

4. Centrifugeuse à vis sans fin à paroi pleine selon la revendication 3,
**caractérisée en ce que**
la bague extérieure commune (136) est maintenue en étant soutenue axialement sur les deux côtés.

5. Centrifugeuse à vis sans fin à paroi pleine selon l'une des revendications 2 à 4,
**caractérisée en ce que**
il est prévu deux voies de circulation intérieures (120, 122) qui sont réalisées sur deux bagues intérieures séparées (116, 118).

6. Centrifugeuse à vis sans fin à paroi pleine selon la revendication 5,
**caractérisée en ce que**
les deux bagues intérieures (116, 118) sont maintenues en étant écartées axialement l'une de l'autre à l'aide d'une bague d'écartement (124).

7. Centrifugeuse à vis sans fin à paroi pleine selon la revendication 5 ou 6,
**caractérisée en ce que**
les deux bagues intérieures (116, 118) sont maintenues en étant soutenues axialement sur un côté.

8. Centrifugeuse à vis sans fin à paroi pleine selon l'une des revendications 2 à 7,
**caractérisée en ce que**
les angles d'appui (146, 148) des corps de roulement (126) des deux bagues de corps de roulement (132, 134) sont conçus avec des valeurs égales.

9. Centrifugeuse à vis sans fin à paroi pleine selon l'une des revendications 1 à 8,
**caractérisée en ce que**
chaque angle d'appui (146, 148) est conçu avec une valeur supérieure à 50 degrés.

10. Centrifugeuse à vis sans fin à paroi pleine selon l'une des revendications 1 à 9,
**caractérisée en ce que**
chaque angle d'appui (146, 148) est conçu avec une valeur comprise entre 53 et 62 degrés, en particulier entre 55 et 60 degrés.
